# EUROPÄISCHE PATENTSCHRIFT

(11) **EP 2 472 071 B1**
(45) Veröffentlichungstag und Bekanntmachung des Hinweises auf die Patenterteilung: **31.07.2013**
(21) Anmeldenummer: 11194300.7
(22) Anmeldetag: 19.12.2011
(51) Int. Cl.: F01D 25/28, F02C 7/20, F02C 7/24

(54) **Industrieanlage mit Schallschutzhaube**
Industrial plant with noise attenuation hood
Installation industrielle dotée d'un capot insonorisant

(30) Priorität: 03.01.2011 CH 122011
(43) Veröffentlichungstag der Anmeldung: 04.07.2012
(73) Patentinhaber: Alstom Technology Ltd, 5400 Baden (CH)
(72) Erfinder: Umbricht, Walter, 5412 Gebenstorf (CH); Vietgen-Zeidler, Anke, 5505 Brunegg (CH)

(56) Entgegenhaltungen:
- EP-A1- 0 013 771
- US-A- 4 199 301
- US-B1- 6 357 221

## Beschreibung

### TECHNISCHES GEBIET

Die vorliegende Erfindung bezieht sich auf das Gebiet der Wartung von Industrieanlegen. Sie betrifft eine Industrieanlage mit Schallschutzhaube gemäss dem Oberbegriff des Anspruchs 1.

### STAND DER TECHNIK

In der Industrie gibt es eine Vielzahl von technischen Anlagen, die Lärm emittiert und daher aus Umweltschutzgründen Gegenstand von Lärmschutzmassnahmen sind. Eine solche Massnahme besteht darin, die betreffende Anlage mit einer Lärmschutzhaube allseitig abzudecken, um die Lärmemissionen entsprechend zu verringern. Es versteht sich von selbst, dass aus Kostengründen eine solche Lärmschutzhaube von der Grösse her möglichst so bemessen wird, dass sie die betreffende Anlage möglichst platzsparend umschliesst. Auf der anderen Seite kann es zu Wartungs- und/oder Reparaturarbeiten notwendig sein, an der von der Lärmschutzhaube umschlossenen Anlage zu arbeiten. Häufig ist es dazu nötig, eine Plattform zu errichten, auf der bei geöffneter Haube an der Anlage gearbeitet werden kann.

Besondere Bedingungen herrschen dabei in Kraftwerken. Die Kraftwerksbetreiber sehen für ihre Kraftwerke jedes Jahr Stillstände vor, um die Kraftwerke zuverlässig zu halten, sowie eine hohe Verfügbarkeit und Restlaufzeit des Kraftwerks zu erreichen.

Um die kostspielige Stillstandszeit möglichst klein zu halten, ist eine detaillierte Planung der Wartungsarbeiten notwendig. Der Erfolg einer solchen Planung wird vor allem von der Effektivität der eingesetzten Werkzeuge und Infrastruktur während des Stillstands bestimmt. Durch hochspezialisierte Werkzeuge und eine entsprechende Infrastruktur können der Arbeitsaufwand verringert, die Stillstandszeit und die damit verbundenen Kosten verkleinert und die Sicherheit während des Stillstands erhöht werden. Häufig ist der für die Wartung zur Verfügung stehende Arbeitsraum ein Problem, dass Verzögerungen und sogar Unfälle zur Folge hat.

Bei Kombikraftwerken sind die Turbosätze (Gasturbinen, Dampfturbinen) mit den oben erwähnten Lärmschutzhauben versehen (siehe z.B. die US 6,477,843 B2), um den Lärm auf ein akzeptables und gesetzlich vorgeschriebenes Niveau zu beschränken. Für Wartungs- und Stillstandszeiten müssen Teile der Lärmschutzhaube entfernt werden, um den Zugang zu den Anlagen zu verbessern. Dies erfordert einen Arbeits- und Zeitaufwand und belegt Krananlagen, die zur selben Zeit an anderer Stelle dringend benötigt werden.

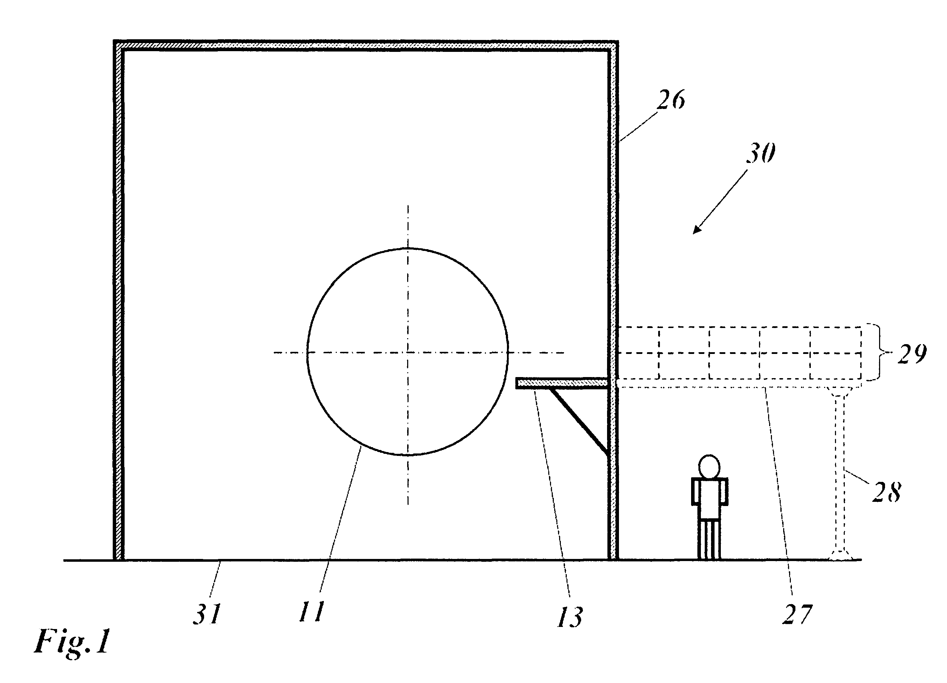

Um die Situation zu verbessern, wird manchmal eine (frei stehende) Arbeitsplattform an der Anlage errichtet, wie dies in Fig. 1 schematisch dargestellt ist. Die vom 1 zeigt im Schnitt eine lärmemittierende Industrieanlage 30 (Turbinenanlage) mit einer Lärmschutzhaube 26, die eine Turbine 11, deren Maschinenachse senkrecht zur Zeichenebene steht und die durch einen Kreis angedeutet ist, umschliesst. Einzelheiten der Turbine 11 wie zum Beispiel die Tragstruktur oder die Frischluftzufuhr und Abgasabfuhr sind der Einfachheit halber nicht dargestellt. Im Inneren der Lärmschutzhaube 26 kann in Höhe der Turbine 11 eine interne Laufbühne 13 vorgesehen sein, die in axialer Richtung an der Maschine entlang führt. Für Arbeiten an der Turbine 11 wird nun ausserhalb der Lärmschutzhaube 26 eine separate Arbeitsplattform 27 errichtet, die mit Stützen 28 am Boden 31 abgestützt ist und durch ein Geländer 29 gesichert ist. Durch entsprechende Öffnungen in der Lärmschutzhaube 26 (in Fig. 1 nicht gezeigt) kann das Arbeitspersonal von der Arbeitsplattform 27 aus die notwendigen Arbeiten an der Turbine 11 durchführen.

Die Arbeitsplattform 27 ist so ausgestaltet, dass sie die für die Arbeiten notwendigen Werkzeuge, Einrichtungen, Werkbänke, Büroausrüstung sowie Instrumente und einzelne Bauteile beim Demontage- und Montageprozess bis zu einem Gewicht von beispielsweise 25 kg tragen kann. Hierfür ist beispielsweise eine Tragfähigkeit der Arbeitsplattform 27 von 500 kg/m² erforderlich. Der Ausbau von Isolierschalen, Brennstofflanzen, Brennern, Geräten und schweren Schrauben kann so über die Arbeitsplattform erfolgen und nicht über Treppen, die ein hohes Verletzungsrisiko mit sich brächten. Allerdings sind solche Arbeitsplattformen häufig nicht vorhanden und können auch nicht durch einen Aufbau mit einem Gerüst ersetzt werden.

Der beschriebene Stand der Technik hat daher die folgenden Nachteile:
- das Entfernen von Teilen der Lärmschutzhaube erfordert erheblichen Arbeits- und Zeitaufwand
- für das Entfernen wird wertvolle Kran-Zeit belegt
- die Errichtung einer separaten Arbeitsplattform ist aufwändig
- eine Arbeitsplattform ist häufig nicht vorhanden
- der Aufbau einer Arbeitsplattform birgt zusätzliche Verletzungsrisiken
- der abschliessende Zusammenbau der Lärmschutzhaube ist erneut arbeits- und zeitaufwändig
- Die bei regelmässigen Wartungsarbeiten im Inneren der Lärmschutzhaube anfallenden Teile werden über eine innere Arbeitsplattform entfernt, was erheblichen Arbeits- und Zeitaufwand erfordert und in vielen Fällen auch wertvolle Kranarbeit belegt, sowie Verletzungsrisiken in sich birgt..

Aus der US 4 199 301 sind Gehäuseteile für Dampfturbinen bekannt, die in die Horizontale klappbar sind, um als Arbeitsbühne zu dienen.

### DARSTELLUNG DER ERFINDUNG

Es ist daher eine Aufgabe der Erfindung, eine lärmemittierende Industrieanlage der eingangs genannten Art so auszugestalten, dass die aufgeführten Nachteile bekannter Anlagen vermieden werden, dass allfällige Wartungs- und Reparaturarbeiten bzw. Stillstandszeiten erheblich verkürzt werden, das der zugehörige Arbeitsaufwand und das damit verbundene Unfallrisiko deutlich verringert wird, und dass die Abhängigkeit von der lokalen Infrastruktur drastisch reduziert wird.

Die Aufgabe wird durch die Gesamtheit der Merkmale des Anspruchs 1 gelöst.

Die erfindungsgemässe lärmemittierende Industrieanlage, insbesondere Gas- oder Dampfturbine, ist zur Dämpfung des von der Anlage ausgehenden Schalls von einer begehbaren Lärmschutzhaube umgeben. Sie ist dadurch gekennzeichnet, dass die Lärmschutzhaube eine für Wartungs- und/oder Reparaturarbeiten vorgesehene horizontale Arbeitsplattform umfasst, und dass die Arbeitsplattform ausklappbar an der Lärmschutzhaube angeordnet ist.

Prinzipiell ist es denkbar, dass - wenn der notwendige Platz im Inneren der Lärmschutzhaube vorhanden ist - die Arbeitsplattform nach innen ausgeklappt werden kann. Wegen der meist beengten Platzverhältnisse innerhalb der Lärmschutzhaube ist es jedoch vorteilhaft, wenn gemäss einer Ausgestaltung der Erfindung die Arbeitsplattform nach aussen ausklappbar ausgebildet ist. hierdurch kann für ein sicheres Arbeiten auf der Plattform eine erhebliche Fläche zur Verfügung gestellt werden.

Besonders vorteilhaft und platzsparend ist es, wenn gemäss einer anderen Ausgestaltung der Erfindung die Lärmschutzhaube eine im Wesentlichen vertikale Wand aufweist, und die Arbeitsplattform ein ausklappbares Wandsegment dieser Wand ist. Durch die Integration der Plattform in die Wand wird wenig oder gar kein zusätzlicher Platz bei eingeklappter Plattform in Anspruch genommen. Andererseits muss das betreffende Wandsegment nicht nur die nötigen Schallschutz- und ggf. Druckfestigkeitseigenschaften (bei Druckunterschieden zwischen Aussen- und Innenraum) haben, sondern auch die notwendige mechanische Stabilität, um begehbar und mit zusätzlichem Gerätegewicht oder dgl. belastbar zu sein. Darüber hinaus muss die eingeklappte Plattform die Lärmschutzhaube sicher schliessen.

Besonders einfach lässt sich die Ausklappbarkeit realisieren, wenn die Arbeitsplattform bzw. das Wandsegment an der Lärmschutzhaube mittels Klappgelenken ausklappbar angelenkt ist. Das Klappgelenk kann dabei als einfaches Scharnier mit fester Drehachse oder als anhebbares Scharnier ausgebildet sein, um eine günstigere Bewegungscharakteristik relativ zur Haube zu ermöglichen.

Wenn gemäss einer weiteren Ausgestaltung der Erfindung die durch die Klappgelenke definierte Drehachse im Wesentlichen mit der unteren Querkante des Wandsegments bzw. der Arbeitsplattform zusammenfällt, klappt die Plattform nur in einer Richtung aus der Wand heraus.

Wenn dagegen die durch die Klappgelenke definierte Drehachse oberhalb der unteren Querkante des Wandsegments bzw. der Arbeitsplattform verläuft, derart, dass die ausgeklappte Arbeitsplattform mit einem Teil ihrer Fläche in den Innenraum der Lärmschutzhaube hineinreicht, werden beim Ausklappen gleichzeitig innen und aussen Arbeitsflächen zur Verfügung gestellt.

Eine weitere Ausgestaltung der Erfindung ist dadurch gekennzeichnet, dass die ausgeklappte Arbeitsplattform vom Boden einen vorgegebenen Abstand hat, und dass zur Erhöhung der mechanischen Stabilität in den Aussenbereichen der Arbeitsplattform Stützen zwischen Arbeitsplattform und Boden vorgesehen sind. Hierdurch lassen sich ohne Schwierigkeiten unterschiedliche Höhen der Arbeitsplattform verwirklichen, die der jeweiligen Anlage optimal angepasst sind.

Im einfachsten Fall können die Stützen mit der Arbeitsplattform lösbar verbunden sein. Sie werden dann beim Einsatz der Plattform separat bereitgestellt und mit der Plattform verbunden, um diese abzustützen.

Besonders einfach und unabhängig von der Infrastruktur vor Ort ist die Vorrichtung jedoch, wenn die Stützen an der Arbeitsplattform ausklappbar befestigt, insbesondere in die Arbeitsplattform integriert sind.

Zur Erhöhung der Sicherheit ist es zweckmässig, wenn die Arbeitsplattform mit einem Geländer gegen das Abstürzen von auf der Arbeitsplattform arbeitendem Personal gesichert werden kann.

Auch hier kann das Geländer separat bereitgestellt und mit der Arbeitsplattform lösbar verbunden sein.

Besonders vorteilhaft ist es jedoch, wenn das Geländer an der Arbeitsplattform ausklappbar befestigt, insbesondere in die Arbeitsplattform integriert ist.

Damit das Wandsegment im eingeklappten Zustand möglichst gut mit der Wand abschliesst, ist es von Vorteil, wenn zwischen dem Wandsegment bzw. der Arbeitsplattform und dem sie umschliessenden Teil der Wand Mittel zur Schallisolierung und/oder Druckdichtung vorgesehen sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem stark vereinfachten Querschnittschema den Aufbau einer Turbinenanlage mit Lärmschutzhaube und externer Arbeitsplattform gemäss dem Stand der Technik;
- Fig. 2: in einer zu Fig. 1 vergleichbaren Darstellung eine Lärmschutzhaube mit integrierter ausklappbarer Arbeitsplattform gemäss einem Ausführungsbeispiel der Erfindung;
- Fig. 3: im Detail eine ausklappbare integrierte Arbeitsplattform nach Fig. 2 mit einem einfachen Scharnier als Klappgelenk;
- Fig. 4: im Detail eine ausklappbare integrierte Arbeitsplattform nach Fig. 2 mit einem anhebbaren Scharnier als Klappgelenk;
- Fig. 5: eine Arbeitsplattform gemäss Fig. 2-4 mit integrierten ausklappbaren Stützen und integriertem ausklappbaren Geländer gemäss einem anderen Ausführungsbeispiel der Erfindung; und
- Fig. 6: in einer Seitenansicht von vorne die ausgeklappte Arbeitsplattform mit einer Einrichtung zum Bereithalten von benötigten Arbeitsmitteln.

### WEGE ZUR AUSFÜHRUNG DER ERFINDUNG

Das in der Einleitung genannte Problem der fehlenden beziehungsweise erst mühsam aufzubauenden Arbeitsplattform für Arbeiten an einer lärmemittierenden Industrieanlage, die mit einer Lärmschutzhaube abgedeckt ist, kann auf einfache Weise gelöst werden, wenn die Lärmschutzhaube gemäss der vorliegende Erfindung bereits mit einer entsprechenden ausklappbaren Arbeitsplattform ausgestattet ist. Im Bedarfsfall wird diese Arbeitsplattform einfach ausgeklappt und kann dann ohne weiteren Aufwand für Wartungsarbeiten oder Reparaturarbeiten an der Anlage eingesetzt werden. Besonders vorteilhaft ist es, wenn die Arbeitsplattform in eine Wand der Lärmschutzhaube integriert ist und aus der Wand herausgeklappt werden kann. In diesem Fall wird durch das Herausklappen der Arbeitsplattform gleichzeitig die notwendige Öffnung in der Lärmschutzhaube erzeugt, durch die hindurch das Arbeitspersonal an der Anlage arbeiten kann. Auf diese Weise entfällt nicht nur der Aufbau einer Arbeitsplattform, sondern auch das teilweise Entfernen der Lärmschutzhaube zum Zwecke des Zugangs.

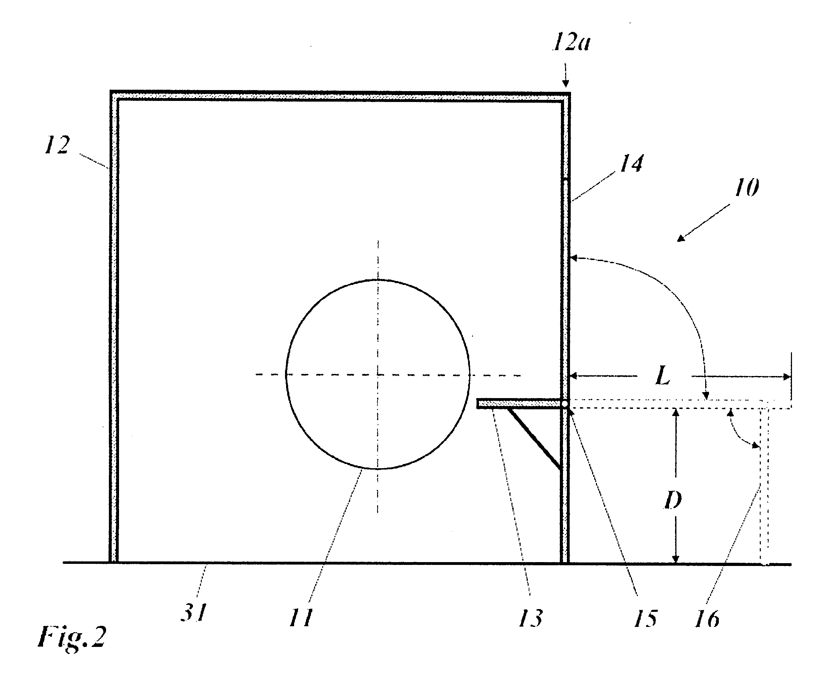

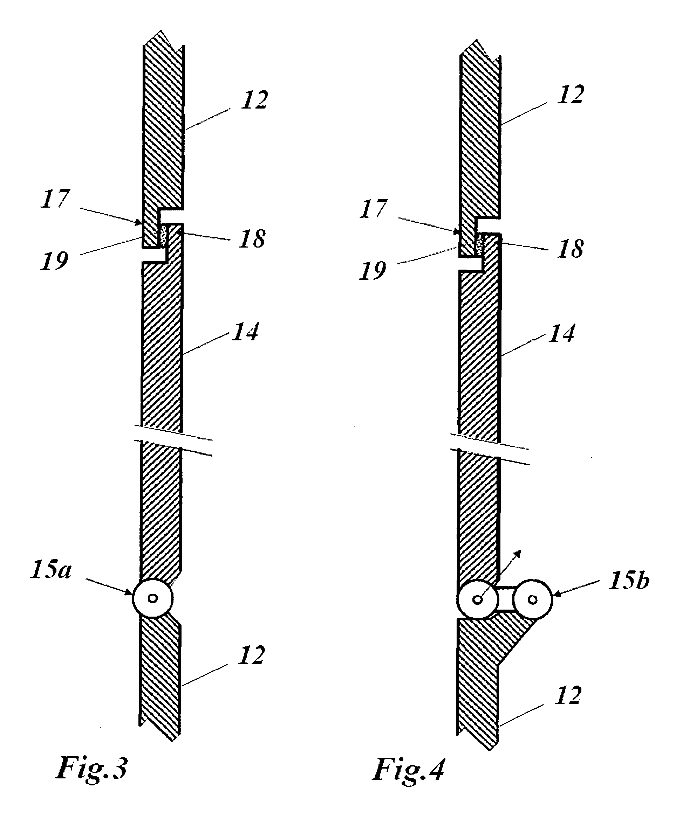

In Fig. 2 ist analog zu Fig. 1 eine lärmemittierende Industrieanlage 10 mit einer Lärmschutzhaube 12 dargestellt, die eine Turbine 11, zum Beispiel eine Gasturbine, umfasst. Die Lärmschutzhaube 12 weist eine im Wesentlichen vertikale Wand 12a auf, an der Innenseite auch eine interne Laufbühne 13 entlang der Turbine 11 angebracht ist. Oberhalb der Laufbühne 13 ist in der Wand 12a ein Wandsegment 14 ausgezeichnet, dass seiner mechanischen Stabilität nach als Arbeitsplattform verwendet werden kann und zu diesem Zwecke mit Hilfe eines an der unteren Querkante angeordneten Klappgelenks 15 in die gestrichelt eingezeichnet Stellung ausgeklappt werden kann. Ist das Wandsegment bzw. die Arbeitsplattform 14 ausgeklappt, bleibt in der Wand 12a eine entsprechen Öffnung zurück, durch die hindurch Personal von der Arbeitsplattform 14 auf gleichen Niveau in das Inneren der Lärmschutzhaube 12 zur Laufbühne 13 gelangen kann. Der Abstand D der Arbeitsplattform vom Boden 31 kann mehrere Meter betragen (siehe zum Vergleich die Grösse des als Piktogramm eingezeichneten Menschen in Fig. 1). Das Klappgelenk 15 kann gemäss Fig. 3 als einfaches Scharnier 15a ausgebildet sein, oder gemäss Fig. 4 als anhebbares Scharnier 15b, um das Wandsegment 14 besser von der Wand 12a abheben zu können.

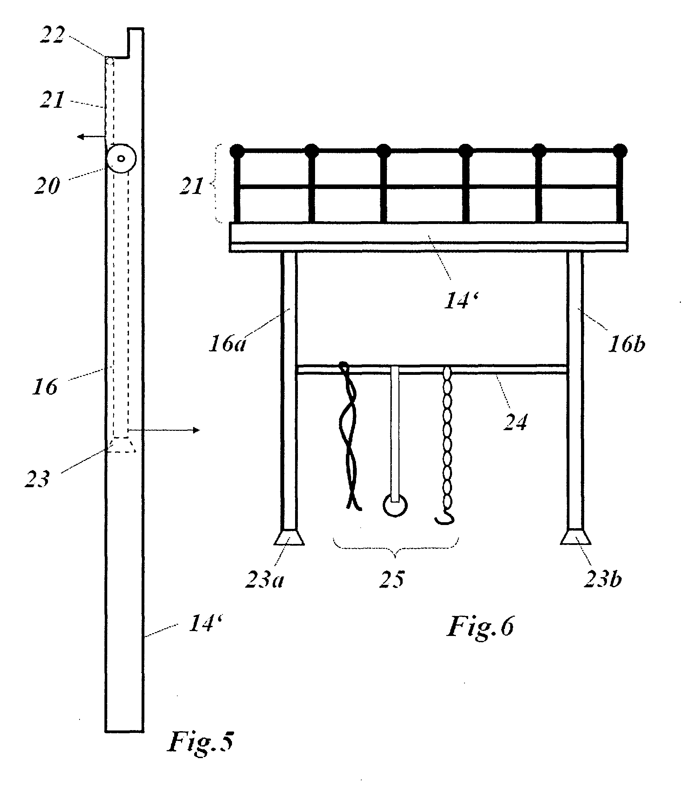

Im eingeklappten Zustand ist das Wandsegment bzw. die Arbeitsplattform 14 in der Wand 12a durch einen in Fig. 2 nicht dargestellten, geeigneten Verriegelungsmechanismus verriegelt, der zum Ausklappen entriegelt wird. Das Wandsegment 14 kann dann mittels einer Ausklappvorrichtung, die als Seilwinde oder hydraulisch oder elektrisch angetrieben ausgeführt sein kann, oder mit Hilfe eines in der Halle vorhandenen Krans um 90° in die horizontale Ausklappposition verschwenkt werden (siehe den Doppelpfeil in Fig. 2). In den aussen liegenden Bereichen der Arbeitsplattform 14 können dann zur Abstützung Stützen 16 (bzw. 16a, 16b in Fig. 6) zwischen Plattform und Boden 31 vorgesehen werden.

Die Stützen 16 bzw. 16a, 16b können mit der Arbeitsplattform 14 (bzw. 14' in Fig. 6) lösbar verbunden sein. Sie werden dann separat bereitgehalten und aufgestellt, bevor die Arbeitsplattform 14 bzw. 14' aus der Wand 12a um 90° herausgeschwenkt wird. Die Stützen 16, 16a, 16b können aber auch an der Arbeitsplattform 14, 14' ausklappbar befestigt sein. Sie stehen dann bei Inbetriebnahme der Arbeitsplattform 14, 14' jederzeit zur Verfügung, nehmen im eingeklappten Zustand keinen Platz weg und verringern die Zeit für die Inbetriebnahme erheblich. Besonders platzsparend ist es, wenn die Stützen 16 bzw. 16a, 16b gemäss Fig. 5 in die Arbeitsplattform 14 bzw. 14' integriert sind und mittels Klappgelenken 20 aus dem Wandsegment herausgeklappt werden können. Verbreiterte Füsse 23 bzw. 23a, 23b an den unteren Enden der Stützen 16 bzw. 16a, 16b sorgen dabei für einen sicheren Stand auf dem Boden 31.

Ähnliche Überlegungen gelten auch für ein Geländer (21 in Fig. 6) dass die Arbeitsplattform 14, 14' gegen das Abstürzen von auf der Arbeitsplattform 14, 14' arbeitendem Personal sichert. Ein solches Geländer 21 kann separat bereitgehalten und mit der Arbeitsplattform 14, 14' lösbar verbunden, z.B. einsteckbar oder anschraubbar, sein. Es kann aber auch zur Vereinfachung und Zeitersparnis an der Arbeitsplattform 14, 14' ausklappbar befestigt sein. Besonders günstig ist es, wenn das Geländer 21 gemäss Fig.5 in die Arbeitsplattform 14, 14' integriert und mittels eines Klappgelenks 22 ausklappbar ausgebildet ist.

Im Beispiel der Fig. 5 fällt die durch die Klappgelenke 15 definierte Drehachse im Wesentlichen mit der unteren Querkante des Wandsegments bzw. der Arbeitsplattform 14, 14' zusammen. Beim Ausklappen des Wandsegments 14 bzw. 14' steht dann nur ausserhalb eine ausgeklappte Arbeitsplattform zur Verfügung. Es ist aber auch denkbar, dass die durch die Klappgelenke definierte Drehachse oberhalb der unteren Querkante des Wandsegments bzw. der Arbeitsplattform 14, 14' verläuft, derart, dass die ausgeklappte Arbeitsplattform 14, 14' mit einem Teil ihrer Fläche in den Innenraum der Lärmschutzhaube 12 hineinreicht. In diesem Fall könnte die in Fig. 2 gezeigte (separate) Laufbühne 13 Teil der ausgeklappten Arbeitsplattform sein, was zu weiteren Vereinfachungen führt.

Um bei eingeklapptem Wandsegment die notwendige Schalldichtigkeit sicherzustellen, ist es von Vorteil, wenn zwischen dem Wandsegment bzw. der Arbeitsplattform 14, 14' und dem sie umschliessenden Teil der Wand 12a Mittel zur Schallisolierung und - wenn zwischen dem Inneren der Lärmschutzhaube 12 und dem Aussenraum ein Druckunterschied (von z.B. 10-20 mbar) herrscht - zur Druckdichtung vorgesehen sind. Dazu sind die Randbereiche des Wandsegments 14 und der sie aufnehmenden Öffnung in der Wand12a als einander überlappende Falze 17 beziehungsweise 18 ausgebildet, zwischen denen zusätzlich eine Dichtung 19 angeordnet ist.

Schliesslich können an der Arbeitsplattform 14 beziehungsweise 14' Vorrichtungen zum Aufbewahren und Bereithalten von für die Wartung benötigten Arbeitsmitteln wie z.B. Seilen, Ketten, Gurten, Haken, Schäkel, Augbolzen etc. vorgesehen werden, um dem Arbeitspersonal unnötige Wege zu ersparen und die Sicherheit im Bezug auf die Arbeitsmittel zu verbessern. Gemäss Fig. 6 kann zur Aufbewahrung der Arbeitsmittel 25 beispielsweise ein Querholm 24 zwischen den stützen 16a und 16b angeordnet werden.

Die Abmessungen der Arbeitsplattform 14 bzw. 14' für jede Anlage sorgfältig ausgelegt werden. Es ist darauf zu achten, dass der Zugang von Lastwagen und Gabelstaplern nicht behindert wird und ausreichend Ablagefläche für die Ablage von grossen und schweren Komponenten der Anlage wie z.B. Turbinen-Rotoren oder -Gehäusen vorhanden ist. Für eine Gasturbine der Anmelderin vom Typ GT26, würde die Arbeitsplattform 14, 14' standardmässig beispielweise eine Länge L (Fig. 2) von 10 m und eine Breite von etwa 5 m haben. Die erfindungsgemässe Arbeitsplattform ist innerhalb von weniger als einer Stunde einsatzbereit. Sie zeigt ihre Vorteile vor allem in unvorhergesehenen Situationen einer ungeplanten Wartung oder eines plötzlichen Ausfalls der Anlage (Gasturbine), wenn im Voraus die Abläufe der Arbeiten und Bereitstellung der Infrastruktur nicht geplant werden können. Die Arbeitsplattform erlaubt in diesen Fällen die schnelle Bereitstellung der nötigsten Mittel, um sofort mit den Ausbauarbeiten an der Anlage beginnen zu können.

Mit der erfindungsgemässen Arbeitsplattform werden unnötige Vorarbeiten, die Belegung von Kränen und Sicherheitsrisiken vermieden. Insbesondere ist die Sicherheit innerhalb weniger Minuten erreicht und unter Kontrolle. Sobald die Plattform sich in ihrer ausgeklappten horizontalen Position befindet, können schnell Aufgangstreppen und Handläufe bzw. Geländer für einen leichten und sicheren Zugang zur Plattform und Umgang mit der Plattform hinzugefügt werden.

Insgesamt werden mit der Erfindung bei hoher Sicherheit erhebliche Einsparungen an Arbeit und Zeit erzielt.

### BEZUGSZEICHENLISTE

- 10, 30: lärmemittierende Industrieanlage
- 11: Turbine (z.B. Gasturbine)
- 12, 26: Lärmschutzhaube
- 12a: Wand (vertikal)
- 13: Laufbühne (intern)
- 14, 14': Wandsegment/Arbeitsplattform
- 15: Klappgelenk
- 15a: Scharnier
- 15b: anhebbares Scharnier
- 16,28: Stütze
- 16a, 16b: Stütze
- 17, 18: Falz
- 19: Dichtung
- 20, 22: Klappgelenk
- 21,29: Geländer
- 23: Fuss
- 23a,23b: Fuss
- 24: Querholm
- 25: Arbeitsmittel
- 27: Arbeitsplattform
- 31: Boden
- D: Abstand Arbeitsplattform-Boden
- L: Länge

## Patentansprüche

1. Lärmemittierende Industrieanlage (10), insbesondere Gas- oder Dampfturbine (11), welche zur Dämpfung des von der Anlage ausgehenden Schalls von einer begehbaren Lärmschutzhaube (12) umgeben ist, **dadurch gekennzeichnet, dass** die Lärmschutzhaube (12) eine für Wartungs- und/oder Reparaturarbeiten vorgesehene horizontale Arbeitsplattform (14, 14') umfasst, und dass die Arbeitsplattform (14, 14') ausklappbar an der Lärmschutzhaube (12) angeordnet ist.

2. Lärmemittierende Industrieanlage nach Anspruch 1, **dadurch gekennzeichnet, dass** die Arbeitsplattform (14, 14') nach aussen ausklappbar ausgebildet ist.

3. Lärmemittierende Industrieanlage nach Anspruch 1 oder 2, **dadurch gekennzeichnet, dass** die Lärmschutzhaube (12) eine im Wesentlichen vertikale Wand (12a) aufweist, und dass die Arbeitsplattform (14, 14') ein ausklappbares Wandsegment dieser Wand (12a) ist.

4. Lärmemittierende Industrieanlage nach Anspruch 3, **dadurch gekennzeichnet, dass** die Arbeitsplattform bzw. das Wandsegment (14, 14') an der Lärmschutzhaube (12) mittels Klappgelenken (15) ausklappbar angelenkt ist.

5. Lärmemittierende Industrieanlage nach Anspruch 4, **dadurch gekennzeichnet, dass** die durch die Klappgelenke (15) definierte Drehachse im Wesentlichen mit der unteren Querkante des Wandsegments bzw. der Arbeitsplattform (14, 14') zusammenfällt.

6. Lärmemittierende Industrieanlage nach Anspruch 4, **dadurch gekennzeichnet, dass** die durch die Klappgelenke definierte Drehachse oberhalb der unteren Querkante des Wandsegments bzw. der Arbeitsplattform (14, 14') verläuft, derart, dass die ausgeklappte Arbeitsplattform (14, 14') mit einem Teil ihrer Fläche in den Innenraum der Lärmschutzhaube (12) hineinreicht.

7. Lärmemittierende Industrieanlage nach einem der Ansprüche 1 bis 6, **dadurch gekennzeichnet, dass** die ausgeklappte Arbeitsplattform (14, 14') vom Boden (31) einen vorgegebenen Abstand (D) hat, und dass zur Erhöhung der mechanischen Stabilität in den Aussenbereichen der Arbeitsplattform (14, 14') Stützen (16, 16a, 16b) zwischen Arbeitsplattform (14, 14') und Boden (31) vorgesehen sind.

8. Lärmemittierende Industrieanlage nach Anspruch 7, **dadurch gekennzeichnet, dass** die Stützen (16, 16a, 16b) mit der Arbeitsplattform (14, 14') lösbar verbunden sind.

9. Lärmemittierende Industrieanlage nach Anspruch 7, **dadurch gekennzeichnet, dass** die Stützen (16, 16a, 16b) an der Arbeitsplattform (14, 14') ausklappbar befestigt sind.

10. Lärmemittierende Industrieanlage nach Anspruch 9, **dadurch gekennzeichnet, dass** die Stützen (16, 16a, 16b) in die Arbeitsplattform (14, 14') integriert sind.

11. Lärmemittierende Industrieanlage nach einem der Ansprüche 1 bis 10, **dadurch gekennzeichnet, dass** die Arbeitsplattform (14, 14') mit einem Geländer (21) gegen das Abstürzen von auf der Arbeitsplattform (14, 14') arbeitendem Personal gesichert werden kann.

12. Lärmemittierende Industrieanlage nach Anspruch 11, **dadurch gekennzeichnet, dass** das Geländer (21) an der Arbeitsplattform (14, 14') ausklappbar befestigt ist.

13. Lärmemittierende Industrieanlage nach Anspruch 12, **dadurch gekennzeichnet, dass** das Geländer (21) in die Arbeitsplattform (14, 14') integriert ist.

14. Lärmemittierende Industrieanlage nach Anspruch 3, **dadurch gekennzeichnet, dass** zwischen dem Wandsegment bzw. der Arbeitsplattform (14, 14') und dem sie umschliessenden Teil der Wand (12a) Mittel (17-19) zur Schallisolierung und/oder Druckdichtung vorgesehen sind.

15. Lärmemittierende Industrieanlage nach Anspruch 4, **dadurch gekennzeichnet, dass** das Klappgelenk (15) als Scharnier (15a) oder als anhebbares Scharnier (15b) ausgebildet ist.

## Claims

1. Noise-emitting industrial plant (10), especially gas turbine or steam turbine (11), which is enclosed by a man-accessible noise attenuation hood (12) for damping the noise which issues from the plant, **characterized in that** the noise attenuation hood (12) comprises a horizontal working platform (14, 14') which is provided for maintenance operations and/or repair work, and **in that** the working platform (14, 14') is arranged on the noise attenuation hood (12) in a foldout manner.

2. Noise-emitting industrial plant according to Claim 1, **characterized in that** the working platform (14, 14') is of an outwardly foldable design.

3. Noise-emitting industrial plant according to Claim 1 or 2, **characterized in that** the noise attenuation hood (12) has an essentially vertical wall (12a), and **in that** the working platform (14, 14') is a foldout wall segment of this wall (12a).

4. Noise-emitting industrial plant according to Claim 3, **characterized in that** the working platform or the wall segment (14, 14') is connected to the noise attenuation hood (12) in a foldout manner by means of swivel joints (15).

5. Noise-emitting industrial plant according to Claim 4, **characterized in that** the rotational axis which is defined by the swivel joints (15) coincides essentially with the lower transverse edge of the wall segment or of the working platform (14, 14').

6. Noise-emitting industrial plant according to Claim 4, **characterized in that** the rotational axis which is defined by the swivel joints extends above the lower transverse edge of the wall segment or of the working platform (14, 14') in such a way that the folded out working platform (14, 14'), by a part of its surface, reaches into the interior of the noise attenuation hood (12).

7. Noise-emitting industrial plant according to one of Claims 1 to 6, **characterized in that** the folded out working platform (14, 14') has a predetermined clearance (D) from the ground (31), and **in that** supports (16, 16a, 16b) are provided between working platform (14, 14') and ground (31) for increasing the mechanical stability in the outside regions of the working platform (14, 14').

8. Noise-emitting industrial plant according to Claim 7, **characterized in that** the supports (16, 16a, 16b) are releasably connected to the working platform (14, 14').

9. Noise-emitting industrial plant according to Claim 7, **characterized in that** the supports (16, 16a, 16b) are fastened on the working platform (14, 14') in a foldout manner.

10. Noise-emitting industrial plant according to Claim 9, **characterized in that** the supports (16, 16a, 16b) are integrated into the working platform (14, 14').

11. Noise-emitting industrial plant according to one of Claims 1 to 10, **characterized in that** the working platform (14, 14') can be made safe against the falling off of personnel working on the working platform (14, 14') by a guard rail (21).

12. Noise-emitting industrial plant according to Claim 11, **characterized in that** the guard rail (21) is fastened on the working platform (14, 14') in a foldout manner.

13. Noise-emitting industrial plant according to Claim 12, **characterized in that** the guard rail (21) is integrated into the working platform (14, 14').

14. Noise-emitting industrial plant according to Claim 3, **characterized in that** means (17 - 19) for sound insulation and/or pressure sealing are provided between the wall segment or the working platform (14, 14') and the part of the wall (12a) enclosing it.

15. Noise-emitting industrial plant according to Claim 4, **characterized in that** the swivel joint (15) is designed as a hinge (15a) or as a double hinge (15b).

## Revendications

1. Installation industrielle (10) générant du bruit, en particulier turbine à gaz ou à vapeur (11), qui est entourée, en vue d'amortir le bruit provenant de l'installation, d'un capot insonorisant (12) sur lequel on peut marcher, **caractérisée en ce que** le capot insonorisant (12) comprend une plate-forme de travail horizontale (14, 14') prévue pour des travaux d'entretien et/ou de réparation, et **en ce que** la plate-forme de travail (14, 14') est disposée de manière rabattable sur le capot insonorisant (12).

2. Installation industrielle générant du bruit selon la revendication 1, **caractérisée en ce que** la plate-forme de travail (14, 14') est réalisée de manière à pouvoir être rabattue vers l'extérieur.

3. Installation industrielle générant du bruit selon la revendication 1 ou 2, **caractérisée en ce que** le capot insonorisant (12) présente une paroi essentiellement verticale (12a) et **en ce que** la plate-forme de travail (14, 14') est un segment de paroi rabattable de cette paroi (12a).

4. Installation industrielle générant du bruit selon la revendication 3, **caractérisée en ce que** la plate-forme de travail ou le segment de paroi (14, 14') est articulé(e) de manière rabattable au capot insonorisant (12) au moyen d'articulations pivotantes (15).

5. Installation industrielle générant du bruit selon la revendication 4, **caractérisée en ce que** l'axe de rotation défini par les articulations pivotantes (15) coïncide essentiellement avec l'arête transversale inférieure du segment de paroi ou de la plate-forme de travail (14, 14').

6. Installation industrielle générant du bruit selon la revendication 4, **caractérisée en ce que** l'axe de rotation défini par les articulations pivotantes s'étend au-dessus de l'arête transversale inférieure du segment de paroi ou de la plate-forme de travail (14, 14'), de telle sorte que la plate-forme de travail (14, 14') rabattue entre avec une partie de sa surface dans l'espace interne du capot insonorisant (12).

7. Installation industrielle générant du bruit selon l'une quelconque des revendications 1 à 6, **caractérisée en ce que** la plate-forme de travail (14, 14') rabattue présente une distance prédéfinie (D) depuis le sol (31), et **en ce que** pour augmenter la stabilité mécanique dans les régions extérieures de la plate-forme de travail (14, 14'), on prévoit des supports (16, 16a, 16b) entre la plate-forme de travail (14, 14') et le sol (31).

8. Installation industrielle générant du bruit selon la revendication 7, **caractérisée en ce que** les supports (16, 16a, 16b) sont connectés de manière détachable à la plate-forme de travail (14, 14').

9. Installation industrielle générant du bruit selon la revendication 7, **caractérisée en ce que** les supports (16, 16a, 16b) sont fixés de manière rabattable sur la plate-forme de travail (14, 14').

10. Installation industrielle générant du bruit selon la revendication 9, **caractérisée en ce que** les supports (16, 16a, 16b) sont intégrés dans la plate-forme de travail (14, 14').

11. Installation industrielle générant du bruit selon l'une quelconque des revendications 1 à 10, **caractérisée en ce que** la plate-forme de travail (14, 14') peut être protégée avec une balustrade (21) contre une chute du personnel travaillant sur la plate-forme de travail (14, 14').

12. Installation industrielle générant du bruit selon la revendication 11, **caractérisée en ce que** la balustrade (21) est fixée de manière rabattable à la plate-forme de travail (14, 14').

13. Installation industrielle générant du bruit selon la revendication 12, **caractérisée en ce que** la balustrade (21) est intégrée à la plate-forme de travail (14, 14').

14. Installation industrielle générant du bruit selon la revendication 3, **caractérisée en ce qu'**entre le segment de paroi ou la plate-forme de travail (14, 14') et la partie de la paroi (12a) qui l'entoure sont prévus des moyens (17-19) pour l'isolation sonore et/ou l'étanchéité à la pression.

15. Installation industrielle générant du bruit selon la revendication 4, **caractérisée en ce que** l'articulation pivotante (15) est réalisée sous forme de charnière (15a) ou sous forme de charnière soulevable (15b).
